(19) Europäisches Patentamt
European Patent Office
Office européen des brevets

(11) **EP 2 895 549 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **13759182.2**

(22) Anmeldetag: **06.09.2013**

(51) Int Cl.:
*C08L 23/08* (2006.01)     *C08L 23/14* (2006.01)

(86) Internationale Anmeldenummer:
**PCT/EP2013/068423**

(87) Internationale Veröffentlichungsnummer:
**WO 2014/040914 (20.03.2014 Gazette 2014/12)**

(54) **VERNETZUNGSMITTEL-FREIE THERMOPLASTISCHE MISCHUNG MIT HOHER FLEXIBILITÄT UND HOHEM SCHMELZPUNKT**

CROSSLINKING-AGENT-FREE THERMOPLASTIC MIXTURE WITH HIGH FLEXIBILITY AND HIGH MELTING POINT

MELANGE THERMOPLASTIQUE SANS AGENT DE RÉTICULATION PRESENTANT UNE GRANDE SOUPLESSE ET UN POINT DE FUSION ELEVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2012 EP 12183894**

(43) Veröffentlichungstag der Anmeldung:
**22.07.2015 Patentblatt 2015/30**

(60) Teilanmeldung:
**19172620.7**

(73) Patentinhaber: **Sika Technology AG**
**6340 Baar (CH)**

(72) Erfinder:
• **GÖSSI, Matthias**
  **CH-8610 Uster (CH)**
• **ZWEIFEL, Peter**
  **CH-8783 Linthal (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
EP-A1- 0 605 180     US-A1- 2008 150 261
US-B1- 6 803 415

**Beschreibung**

**Technisches Gebiet**

Die Erfindung betrifft eine Vernetzungsmittel-freie thermoplastische Mischung und deren Verwendung für Dachbahnen oder Abdichtungsbahnen.

**Stand der Technik**

Die Gebrauchstemperaturen von Dach- und Automobilanwendungen wie z.B. Dach- oder Abdichtungsbahnen erfordern Materialien mit einer Schmelztemperatur von mindestens 140°C. Polypropylen (PP) mit einer Schmelztemperatur von etwa 160°C ist daher als Standardkunststoff erste Wahl. Polyethylen (PE) mit einer Schmelztemperatur von maximal 125°C ist hierfür nicht geeignet. Isotaktisches Polypropylen (iPP) ist aber ein steifes Polymer und weist wegen der relativ hohen Glasübergangstemperatur (Tg etwa 10°C) eine schlechte Schlagzähigkeit auf, insbesondere bei niedrigen Temperaturen. Es ist daher notwendig, iPP flexibler und zäher zu machen.

Um iPP zäher zu machen, kann eine zweite Domäne in das Polymer eingebaut werden, die organisch oder anorganisch sein kann. Am zweckmäßigsten hat sich der Einbau von Ethylenmonomeren in das Propylengrundgerüst erwiesen. Solche Polymere sind gut bekannte Handelsprodukte und werden als statistisches Polypropylen-Copolymer oder Polypropylen-Randomcopolymer (Raco; "random copolymer") oder schlagfestes Polypropylen-Copolymer (ICP; "impact copolymer") bezeichnet. Diese Polypropylen-Copolymere weisen aber immer noch eine relativ hohe Steifigkeit auf.

Im Handel erhältlich sind auch komplexe schlagzähmodifizierte Mischungen aus Polypropylen, Polyethylen und Copolymeren davon, die als "Reaktorblends" bezeichnet werden. Die Polymere dieser Mischungen werden gleichzeitig in einem Multizonenreaktor hergestellt. Die erhaltenen Polymermischungen zeigen einen niedrigen Modul und somit eine hohe Flexibilität und mit etwa 140°C einen höheren Schmelzpunkt als PE. Allerdings ist ihr Schmelzpunkt damit um etwa 20°C niedriger als von Mischungen auf Basis von iPP. Solche Polymermischungen sind unter der Bezeichnung Hifax® von LyondellBasell im Handel erhältlich.

PP-Homopolymere (iPP) und PP-Copolymere (Raco und ICP) zeigen eine gute Mischbarkeit mit handelsüblichen Ethylen-Propylen-Copolymeren, wie Vistamaxx® oder Versify®, und können durch den Zusatz solcher Ethylen-Propylen-Copolymere flexibilisiert werden. Auf diese Weise flexibilisierte Homopolymere bzw. Copolymere sind aber bei tiefen Temperaturen häufig spröde.

Zur Flexibilisierung von iPP, Raco und ICP wurde auch der Einsatz von Ethylen-alpha-Olefin-Copolymeren untersucht, die auch als Polyolefin-Elastomere (POE) bezeichnet werden. Nitta et al., Polymer, 39, 53-58 (1998), untersuchten Mischungen von iPP und Ethylen-l-Buten-Copolymeren. Yamagushi et al., J. Polym. Sci., 35, 953-961 (1997) stellten Mischungen von iPP und Ethylen-l-Hexen-Copolymeren her. In einer anderen Studie untersuchten Yamagushi et al., J. Appl. Polym. Sci., 62, 87-97 (1996), die Kompatibilität von Mischungen von iPP und Ethylen-Propylen-Kautschuk.

Die US 6,803,415 B1 beschreibt Mischungen von 10 bis 90 Gew.-% eines Random-Copolymers aus Propylen und einem Comonomer ausgewählt aus Ethylen und $C_4$-$C_8$ alpha-Olefinen mit einem Schmelzpunkt zwischen 100 °C und 140 °C, sowie 10 bis 90 Gew.-% eines Random-Copolymers aus Ethylen und einem Comonomer ausgewählt aus $C_3$-$C_{10}$ alpha-Olefinen, die ein bestimmtes Mw/Mn Verhältnis aufweisen. Derartige Mischungen werden zur Herstellung von extrudierten Filmen und flexiblen Abdeckfolien, sowie für Kabel vorgeschlagen.

Die EP 0 605 180 A1 offenbart Polypropylen-Zusammensetzungen aus 55 bis 95 Gewichtsteilen Polypropylen und 5 bis 45 Gewichtsteilen eines Ethylen/1-Butylen oder Ethylen/1-Octen Random-Copolymers. Bei dem Polypropylen kann es sich um ein Random- oder Block-Copolymer handeln, wobei aber der Anteil an neben Propylen enthaltenen Monomeren nicht mehr als 10 mol% betragen soll. Die Mischungen finden in Folien insbesondere für den Automobilbereich Anwendung, wo sie in der Innenausstattung oder als dekorative Außenelemente eingesetzt werden können.

Die US 2008/150261 A1 beschreibt schließlich teilweise vernetzte thermoplastische Elastomer-Zusammensetzungen, die Propylen/Ethylen oder Propylen/$\alpha$-Olefin-Copolymere mit einer Schagfestigkeit von mindesten 30 kJ/m², Ethylen/$\alpha$-Olefin-Copolymere und thermoplastische Elastomere sowie zusätzliche Vernetzungsmittel enthalten. Derartige Zusammensetzungen können mit hohen Produktionsgeschwindigkeiten zu Formteilen verarbeitet werden, da der erforderliche Zeitraum von der Injektion des Material bis zu dessen ausreichender Aushärtung sehr kurz ist.

**Darstellung der Erfindung**

Die Aufgabe der vorliegenden Erfindung bestand darin, ein Material mit hoher Gebrauchstemperatur bzw. hohem Schmelzpunkt und hoher Flexibilität bereitzustellen, das für Dach- oder Abdichtungsbahnen, z.B. für Dach- oder Automobilanwendungen, geeignet ist. Überraschenderweise erhält man eine thermoplastische Mischung mit hohem Schmelzpunkt und hoher Flexibilität, die außerdem ausgezeichnete mechanische Eigenschaften und eine sehr vorteilhafte Glasübergangstemperatur aufweist, wenn man ein handelsübliches schlagfestes PP-Copolymer (ICP) mit einem Ethylen-l-Octen-Copolymer in einem bestimmten Verhältnis mischt.

Die Erfindung gemäß Ansprüchen 1 bis 9 betrifft daher eine Vernetzungsmittel-freie thermoplastische Mischung, umfassend mindestens ein schlagfestes Polypropylen-Copolymer (ICP) und mindestens ein Ethylen-1-Octen Copolymer, wobei das Gewichtsverhältnis von schlagfestem Polypropylen-Copolymer zu Ethylen-1-Octen-Copolymer im Bereich von 35/65 bis 65/35 liegt, wobei das schlagfeste Polypropylen-Copolymer ein Blockcopolymer von Propylen und einem Olefin ist.

Die erfindungsgemäße Mischung weist neben einem relativ hohen Schmelzpunkt ausgezeichnete Eigenschaften hinsichtlich thermischer Stabilität, Flexibilität und Zugfestigkeit auf und eignet sich daher vorzüglich für den Einsatz in Dachbahnen und Abdichtungsbahnen.

Bei der erfindungsgemäßen Mischung handelt es sich um eine Mischung von thermoplastischen Materialien, insbesondere aus dem schlagfesten Polypropylen-Copolymer und dem Ethylen-l-Octen-Copolymer. In der Mischung können ein oder mehrere Typen von schlagfesten Polypropylen-Copolymeren enthalten sein, wobei in der Regel nur ein Typ verwendet wird. In der Mischung können auch ein oder mehrere Arten von Ethylen-l-Octen-Copolymeren enthalten sein, wobei in der Regel nur ein Typ verwendet wird. Thermoplastische Mischungen werden häufig auch als thermoplastische Blends bezeichnet.

Schlagfestes Polypropylen-Copolymer ist ein übliches Handelsprodukt. Polypropylen wird im Handel im Wesentlichen in drei Produktgruppen angeboten, als PP-Homopolymer (hPP), als statistisches Polypropylen-Copolymer (Raco) und als schlagfestes Polypropylen-Copolymer (ICP). Die Copolymere sind Copolymere von Propylen mit einem anderen Olefin, in der Regel Ethylen. Schlagfestes Polypropylen-Copolymer basiert in der Regel auf isotaktischem Polypropylen. Bei schlagfestem Polypropylen-Copolymer handelt es sich im Wesentlichen um ein Blockcopolymer von Propylen und einem Olefin wie z.B. Ethylen, Butylen, Hexen und/oder Octene, bevorzugt Ethylen. Demzufolge sind Random-Copolymere aus Propylen und einem weiteren Olefin nicht als schlagfeste Polypropylen-Copolymere im Sinne dieser Erfindung aufzufassen. Es sind zahlreiche Varianten von Zweiblock- bis zu Mehrblock-Copolymeren bekannt. Weiter sind Varianten mit unterschiedlichen Mengen an Blöcken und/oder unterschiedlichen Molekulargewichten bekannt. Als Kurzbezeichnung wird neben ICP auch PP-B (Polypropylen-Blockcopolymerisat) verwendet.

Der Einbau von Olefinmonomeren in eine PP-Kette bewirkt an sich schon eine Erhöhung der Kristallisationstemperatur. Eine zusätzliche Nukleierung kann z.B. durch Zugabe von Nukleierungsmitteln erreicht werden. Schlagfestes Polypropylen-Copolymer (ICP) ist als nicht zusätzlich nukleiertes schlagfestes Polypropylen-Copolymer oder als zusätzlich nukleiertes schlagfestes Polypropylen-Copolymer (nICP) erhältlich. Die Verwendung von nICP ist bevorzugt, da es einen niedrigeren Modul aufweist. Dadurch wird die Mischqualität verbessert, wodurch sich auch eine weiter verbesserte Zugfestigkeit ergibt. Der Modul kann auch maßgeschneidert werden, z.B. durch Einsatz von Mischungen aus ICP und nICP.

Auch Ethylen-l-Octen-Copolymer ist im Handel in verschiedenen Varianten, z.B. bezüglich 1-Octen-Gehalt und Molekulargewicht, erhältlich. Solche Copolymere können z.B. durch Metallocen-Katalyse dargestellt werden. Bevorzugt handelt es sich um Copolymere mit statistischer Verteilung der Monomereinheiten, die auch als EOR (ethylene-l-octene random copolymer) bezeichnet werden. Der 1-Octen-Gehalt im Ethylen-l-Octen-Copolymer kann in weiten Bereichen variieren, liegt aber geeigneterweise im Bereich von 1 bis 25 mol%, bevorzugt 2 bis 20 mol% und besonders bevorzugt 5 bis 20 mol% oder 7 bis 18 mol%, wobei ein Bereich von 16 bis 20 mol% besonders geeignet ist. Der Anteil von 1-Octen im Copolymer kann ohne weiteres durch $^1$H-NMR-Spektroskopie bestimmt werden. Der Fachmann ist mit dieser Methode vertraut. Der Gehalt lässt sich auch durch eine Dichtebestimmung ermitteln.

Die Copolymere sind wie gesagt im Handel erhältlich, können aber auch vom Fachmann ohne weiteres selbst hergestellt werden. Handelsprodukte für ICP und nICP sind z.B. von ExxonMobile erhältlich. Von Dow werden z.B. Ethylen-l-Octen-Copolymere mit unterschiedlichem 1-Octen-Gehalt als Engage®8450, Engage®8200 und Engage®8842 vertrieben. Von ExxonMobile werden Ethylen-l-Octen-Copolymere unter dem Namen "Exact Plastomers®" vertrieben. Informationen zur Herstellung oder zu den Eigenschaften von schlagfestem Polypropylen-Copolymer können z.B. aus US 2002086947 A1 und von Ethylen-1-Octen-Copolymer z. B. aus Weaver, L.B. et al., "A New Class of Higher Melting Polyolefin Elastomers for Automotive Applications," Proceedings of the SPE Automotive TPO Global Conference, 2006 entnommen werden.

Das Gewichtsverhältnis von schlagfestem Polypropylen-Copolymer zu Ethylen-l-Octen-Copolymer liegt im Bereich von 35/65 bis 65/35, bevorzugt im Bereich von 40/60 bis 60/40. Die besten Eigenschaften werden bei einem Gewichtsverhältnis von schlagfestem Polypropylen-Copolymer zu Ethylen-l-Octen-Copolymer von etwa 50/50 erreicht, also z.B. im Bereich von 45 zu 55 bis 55 zu 45.

In einer besonders bevorzugten Ausführungsform ist das Gewichtsverhältnis von schlagfestem Polypropylen-Copolymer zu Ethylen-l-Octen-Copolymer im Bereich von 45 zu 55 bis 55 zu 45, wobei das Ethylen-l-Octen-Copolymer einen 1-Octen-Gehalt von 16 bis 20 mol% aufweist.

Durch das erfindungsgemäß eingestellte Mischungsverhältnis kann eine echte Mischung, d.h. eine gemeinsame Phase mit einer Peak-Glasübergangstemperatur (Tg) von ca. -25°C erreicht werden, was einzigartig für diese Zusammensetzung ist. Eine entsprechende Mischphase wird auch in "Reaktorblends" gefunden, bis anhin jedoch nicht in Polymer-Blends welche in der Schmelze hergestellt wurden. Eine gemeinsame Phase wird bei Mischungen von schlagfestem Polypropylen-Copolymer zu Ethylen-l-Octen-Copolymer im Gewichtsverhältnis von 70/30 oder 30/70 nicht erhalten. Eine gemeinsame Phase wird auch nicht erhalten, wenn hPP anstelle von ICP oder nICP verwendet wird.

Der Schmelzflussindex (MFI) des Ethylen-l-Octen-Coplymers kann in breiten Bereichen variieren. Ein geeigneter Bereich für den MFI des verwendeten Ethylen-l-Octen-Coplymers ist z.B. 0,2 bis 30 g/10 min, bevorzugt 0,5 bis 15 g/10 min. Der MFI kann bei 190°C, 2,16 kg gemäß der Norm ASTM D1238 bestimmt werden. Der MFI des schlagzähen PP-Copolymers kann auch in breiten Bereichen variieren. Ein geeigneter Bereich für den MFI des verwendeten schlagzähen PP-Copolymers ist z.B. 1 bis 16 g/10 min. Der MFI kann bei 230°C, 2,16 kg gemäß der Norm ISO 1133 bestimmt werden.

Die thermoplastische Mischung kann nur aus schlagfestem Polypropylen-Copolymer und Ethylen-l-Octen-Copolymer bestehen. Der thermoplastischen Mischung können aber auch ein oder mehrere Additive zugesetzt werden, wobei deren Menge im üblichen Rahmen liegen kann. Der Anteil von schlagfestem Polypropylen-Copolymer und Ethylen-l-Octen-Copolymer zusammengenommen in der thermoplastischen Mischung kann variieren, macht aber in der Regel mindestens 40 Gew.-%, bevorzugt mindestens 50 Gew.-% und besonders bevorzugt mindestens 60 Gew.-% der thermoplastischen Mischung aus.

Bei den für die thermoplastische Mischung geeigneten Additiven bzw. Zusätzen können alle verwendet werden, die für den Einsatz in PP-Homopolymeren und PP-Copolymeren, insbesondere für ICP, üblich sind. Die Auswahl der gegebenenfalls eingesetzten Additive richtet sich nach dem Einsatzzweck. Beispiele für Additive sind Stabilisatoren, wie Antioxidantien, z.B. sterisch gehinderte Phenole, Hydrazone oder Bishydrazone, UV-Stabilisatoren, z.B. Alkoxyhydroxybenzophenone und HALS-Stabilisatoren, Hitzestabilisatoren, Lichtstabilisatoren, Farbakzeptoren, wie Pigmente oder Farbstoffe, Kristallkeimbildner, wie Mono-, Di- oder Polycarbonsäuren und deren Salze, Antistatika, wie Verbindungen mit Hydroxyl-, Amino- oder Amidgruppen, Weichmacher, Gleitmittel, wie Fettsäuresalze, Fettsäureester oder Fettsäureamide, Hydrophobierungsmittel, Kompatibilisierungsmittel, Biozide und Flammschutzmittel.

Als weitere Additive kommen Füllstoffe und andere Polymere in Betracht. Übliche Füllstoffe sind z.B. Kreide, Flugasche, Holzmehl, Glasfasern, Glaskugeln und Talkum. Andere Polymere können z.B. als Kompatibilisierungsmittel zugesetzt werden. Kompatibilisierungsmittel sind z.B. Ethylen-Propylen-Kautschuke (EPR) oder Ethylen-Propylen-Dien-Kautschuke (EPDM), welche die mechanischen Eigenschaften wie die Schlagzähigkeit beeinflussen können.

Alle oder ein Teil der Additive können selbstverständlich schon in den eingesetzten Ausgangsmaterialien enthalten sein, z.B. in dem Ethylen-l-Octen-Copolymer oder bevorzugt dem schlagfesten PP-Copolymer. Die Additive können ferner beim Mischvorgang der Copolymer-Ausgangsmaterialien mit zugegeben werden. Sie können gegebenenfalls auch in einem anschließenden Compoundierschritt zugesetzt werden, z.B. in einem zweiten Extruder oder einfach durch Einmischen in das Pulver der erhaltenen thermoplastischen Mischung.

Die Herstellung der thermoplastischen Mischung erfolgt durch übliche, dem Fachmann bekannte Verfahren. Die Ausgangsmaterialen können z.B. in Form von Pulver, Granulat oder Pellets in einer Mischvorrichtung gegeben und unter erhöhter Temperatur, z.B. im Bereich von 180 bis 300°C, gemischt werden. Als Mischvorrichtung eignet sich z.B. ein Extruder, wie ein Einschnecken- oder bevorzugt ein Doppelschneckenextruder, in der die Ausgangsmaterialien bei erhöhter Temperatur plastifiziert und gemischt werden. Die Mischung kann dann durch eine Düse extrudiert und mit einer Schneidvorrichtung granuliert werden. Die Mischung kann so als granuliertes Produkt, z.B. Granulat bzw. Pulver oder Pellets, erhalten werden.

Die erfindungsgemäße thermoplastische Mischung eignet sich insbesondere für Dach- oder Automobilanwendungen, wobei Dachanwendungen bevorzugt sind. Die thermoplastische Mischung wird bevorzugt für Dachbahnen oder Abdichtungsbahnen bzw. Dichtungshäuten verwendet.

Dachbahnen und Abdichtungsbahnen umfassen oder bestehen aus Kunststoffbahnen, für deren Herstellung sich die thermoplastische Mischung der vorliegenden Erfindung eignet.

Unter dem Begriff Dachbahnen und Abdichtungsbahnen werden in diesem Dokument insbesondere biegsame flächige Kunststoffe mit einer Dicke von 0,1 bis 5 mm, insbesondere 0,5 bis 4 mm, verstanden, die sich aufrollen lassen. Somit werden neben Folien im strengen Sinn von Dicken unter 1 mm, auch, und zwar vorzugsweise, Abdichtungsbahnen, wie sie typischerweise zum Abdichten von Dächern oder Terrassen in einer Dicke von typischerweise 1 bis 3 mm, in Spezialfällen sogar in einer Dicke bis maximal 5 mm, verwendet werden, verstanden. Derartige Membranen werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass solche Membranen noch andere Zusatzstoffe und Verarbeitungsmittel, wie Füllstoffe, UV- und Hitzestabilisatoren, Weichmacher, Gleitmittel, Biozide, Flammschutzmittel und Antioxidantien enthalten können. Beispiele hierfür wurden vorstehend genannt. Es können auch weitere Additive z.B. wie vorstehend beschrieben enthalten sein.

**Beispiele**

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

Zur Bestimmung des 1-Octen-Gehalts in den Ethylen-l-Octen-Copolymeren wurde eine $^1$H-NMR-Spektroskopie mit einem Bruker Ultrashield 300 MHz durchgeführt. 30-35 mg einer Probe des Copolymers wurden in 0,7 mL 1,2-Dichlorbenzol-d4 2 Stunden bei 150°C in der Mikrowelle gelöst und 256 Scans wurden bei 130°C akkumuliert. Zur Berechnung des 1-Octen-Gehalts wurde folgende Formel verwendet:

$$\frac{\frac{I_{CH_3}}{3}}{\frac{I_{CH_2}}{2} \cdot \left(1 - \frac{1}{3}x\right) + \frac{I_{CH_3}}{3}} = \frac{1}{3}x$$

worin $I_{CH_3}$ dem Integral des der Methylendgruppe zugeordneten Peaks bei 0,9 ppm entspricht und $I_{CH_2}$ dem Integral des Peaks bei 1,3 ppm entspricht, der den H-Atomen der CH2-Gruppen des Grundgerüsts und der 1-Octen-Seitenketten zugeordnet ist, und x dem Gehalt an 1-Octen in Molprozent entspricht. Die gemessenen Peakpositionen entsprechen den Angaben in der Literatur.

Folgende Verbindungen wurden als Ausgangsmaterialien verwendet. Der MFI der Polypropylen enthaltenden Homo- und Copolymere wurde bei 230°C/2,16 kg gemessen. Der MFI der Ethylen-l-Octen-Copolymer wurde bei 190°C/2.16 kg bestimmt.

| | |
|---|---|
| PP7043L1 | IPC (schlagfestes PP-Copolymer) von ExxonMobil, MFI = 8 g/10 min, Mw ≈ 398000 g/mol |
| PP8013L1 | nIPC (nukleiertes schlagfestes PP-Copolymer) von ExxonMobil, MFI = 8 g/10 min, Mw ≈ 344000 g/mol |
| PP1063L1 | hPP von ExxonMobil, MFI = 8 g/10 min, Mw ≈ 477000 g/mol |
| Engage®8842 | EOR18, Ethylen-1-Octen-Copolymer von DOW, MFI = 2 g/10 min, Mw ≈ 176000 g/mol, 1-Octen-Gehalt = 17,9 mol% |
| Hifax® CA212 | thermoplastisches Polyolefin (Reaktorblend aus Polyethylen und Polypropylen), MFI = 8 g/10 min |

Die Ausgangspolymere wurden in den in nachstehender Tabelle aufgeführten Mischverhältnissen gemischt. Hierzu wurden die Polymere in einem Gleichlauf-Doppelschneckenextruder mit einem Hohlraumvolumen von etwa 5 cm$^3$ compoundiert. Die Mischung erfolgt bei einer Scherrate von 100 U/min bei 200°C für 20 min. Danach wurde die Polymerschmelze aus dem Extruder freigesetzt und an Luft gekühlt. Alle Versuche wurden in einer Stickstoffatmosphäre durchgeführt. Die erhaltenen Proben wurden mit folgenden Methoden untersucht.

Thermische Analyse

Schmelztemperaturen und Kristallisierungstemperatur wurden mit einem Differentialscanningkalorimeter (DSC) von Mettler Toledo, DSC 882$^e$, bestimmt. Schmelztemperaturen wurden aus dem ersten Aufheizdurchlauf von -30°C auf 200°C mit einer Heizgeschwindigkeit von 10°C min$^{-1}$ ermittelt (Probengewicht etwa 10 mg). Kristallisierungstemperaturen wurden aus dem ersten Kühldurchlauf von 200°C auf -30°C mit einer Kühlgeschwindigkeit von 10°C min$^{-1}$ ermittelt.

Dynamisch-mechanische Analyse

DMA-Messungen erfolgten mit einem Mettler Toledo DMA/SDTA 861$^e$. Glasübergangstemperaturen wurden aus dem Phasenwinkel tan $\delta$ bestimmt, der dem Verhältnis von Verlustmodul zu Speichermodul entspricht. Die Proben wurden von -90°C auf 200°C mit einer Heizgeschwindigkeit von 5°C min$^{-1}$ erwärmt. Die Frequenz wurde konstant bei 1 Hz gehalten, während die maximale Kraftamplitude und die maximale Verschiebung auf 10 N bzw. 5 $\mu$m beschränkt wurden. Die Scherverformung lag zwischen 0,25 und 0,5%.

**Tabelle**

| Beispiel | 1* | 2* | 3* | 4 | 5* | 6 | 7* | 8* |
|---|---|---|---|---|---|---|---|---|
| | ICP | EOR18 | ICP/EOR18 | ICP/EOR18 | ICP/EOR18 | nICP/EOR18 | hPP/EOR18 | Hifax CA212 |
| Gewichtsverhältnis | | | 70/30 | 50/50 | 30/70 | 50/50 | 50/50 | |
| DMA | | | | | | | | |
| Peak Glasübergangstemperatur [°C] | (-50/10) | -45 | -50 | -25 | -45 | -27 | -50 | -22 |
| DSC | | | | | | | | |
| Peak Schmelztemperatur [°C] | 166 | 38 | 166/40 | 166 | 165/39 | 165/44 | 165/35 | 145/40 |
| Peak Kristallisierungstemperatur [°C] | 115/94 | 22 | 120/75 /20 | 120/75 | 120/75 /20 | 124/76 | 124/21 | 100/75 |

*nicht gemäß der Erfindung

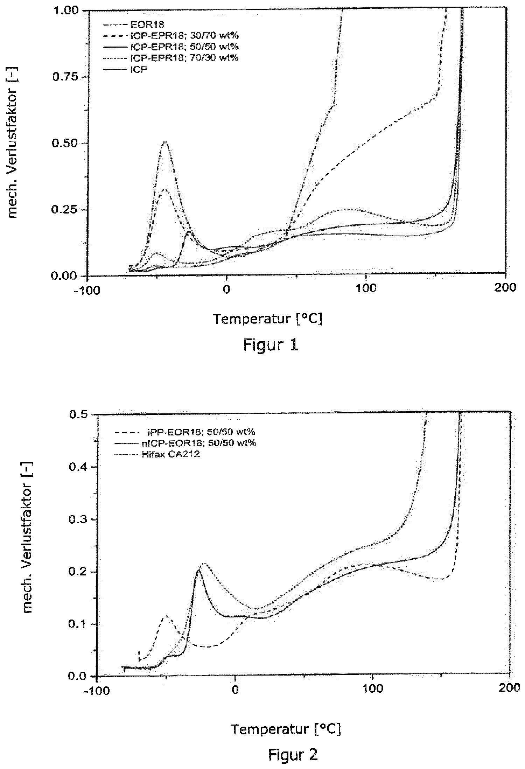

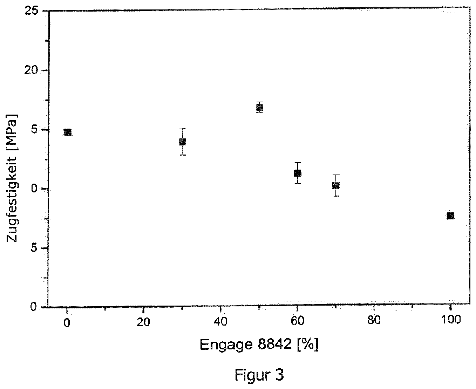

Figur 1 zeigt den mechanischen Verlustfaktor als Funktion der Temperatur für verschiedene Mischverhältnisse von ICP und EOR18. Figur 2 zeigt den mechanischen Verlustfaktor als Funktion der Temperatur für hPP, Hifax®CA212, und einer 50/50 Mischung von nICP und EOR18. In Figur 3 ist die Zugfestigkeit als Funktion des Gehalts an EOR18 in nICP/EOR18-Mischungen abgebildet.

Das schlagfeste PP-Copolymer zeigt im Vergleich zu hPP eine verbesserte Kompatibilität mit EOR18. Mischungen von ICP mit EOR18 im Verhältnis 50/50 zeigen keine Kristallisation bei etwa 20°C (DSC) und einen einzigartigen Relaxationspeak bei -25°C, der Mischbarkeit der beiden Copolymere in einer Phase anzeigt.

## Patentansprüche

1. Vernetzungsmittel-freie thermoplastische Mischung, umfassend mindestens ein schlagfestes Polypropylen-Copolymer (ICP) und mindestens ein Ethylen-l-Octen-Copolymer, wobei das Gewichtsverhältnis von schlagfestem Polypropylen-Copolymer zu Ethylen-l-Octen-Copolymer im Bereich von 35/65 bis 65/35 liegt, wobei das schlagfeste Polypropylen-Copolymer ein Blockcopolymer von Propylen und einem Olefin ist.

2. Vernetzungsmittel-freie thermoplastische Mischung nach Anspruch 1, **dadurch gekennzeichnet, dass** der 1-Octen-Gehalt im Ethylen-l-Octen-Copolymer, bestimmt gemäß dem auf den Seiten 8 und 9 beschriebenen Verfahren, im Bereich von 2 bis 20 mol% liegt.

3. Vernetzungsmittel-freie thermoplastische Mischung nach Anspruch 1 oder Anspruch 2, **dadurch gekennzeichnet, dass** das schlagfeste Polypropylen-Copolymer (ICP) ein nicht zusätzlich nukleiertes schlagfestes Polypropylen-Copolymer oder ein zusätzlich nukleiertes schlagfestes Polypropylen-Copolymer (nICP) ist.

4. Vernetzungsmittel-freie thermoplastische Mischung nach irgendeinem der Ansprüche 1 bis 3, **dadurch gekennzeichnet, dass** das Gewichtsverhältnis von schlagfestem Polypropylen-Copolymer zu Ethylen-l-Octen-Copolymer im Bereich von 40/60 bis 60/40 liegt.

5. Vernetzungsmittel-freie thermoplastische Mischung nach irgendeinem der Ansprüche 1 bis 4, **dadurch gekennzeichnet, dass** der 1-Octen-Gehalt im Ethylen-l-Octen-Copolymer im Bereich von 7 bis 18 mol% liegt.

6. Vernetzungsmittel-freie thermoplastische Mischung nach irgendeinem der Ansprüche 1 bis 5, **dadurch gekennzeichnet, dass** das gemeinsame Gewicht von schlagfestem Polypropylen-Copolymer und Ethylen-l-Octen-Copolymer in der thermoplastischen Mischung mindestens 50 Gew.-% ausmacht.

7. Vernetzungsmittel-freie thermoplastische Mischung nach irgendeinem der Ansprüche 1 bis 6, **dadurch gekennzeichnet, dass** die Mischung ein oder mehrere Additive ausgewählt aus Füllstoffen, UV- und Hitzestabilisatoren, Weichmacher, Gleitmittel, Biozide, Flammschutzmittel und Antioxidantien umfasst.

8. Vernetzungsmittel-freie thermoplastische Mischung nach irgendeinem der Ansprüche 1 bis 7, **dadurch gekennzeichnet, dass** die Mischung in Form einer Dachbahn oder Abdichtungsbahn oder, im Fall von mehrschichtigen Bahnen, in Form von mindestens einer Schicht einer Dachbahn oder Abdichtungsbahn vorliegt.

9. Verwendung einer vernetzungsmittel-freien thermoplastischen Mischung nach einem der Ansprüche 1 bis 8 für Dachbahnen oder Abdichtungsbahnen.

## Claims

1. Crosslinking agent-free thermoplastic mixture comprising at least one impact-resistant polypropylene copolymer (ICP) and at least one ethylene-1-octene copolymer, wherein the weight ratio of impact-resistant polypropylene copolymer to ethylene-1-octene copolymer is in the range from 35/65 to 65/35, wherein the impact-resistant polypropylene copolymer is a block copolymer of propylene and an olefin.

2. Crosslinking agent-free thermoplastic mixture according to Claim 1, **characterized in that** the 1-octene content in the ethylene-1-octene copolymer determined according to the process described on pages 8 and 9 is in the range from 2 to 20 mol%.

3. Crosslinking agent-free thermoplastic mixture according to Claim 1 or Claim 2, **characterized in that** the impact-resistant polypropylene copolymer (ICP) is a non-additionally-nucleated impact-resistant polypropylene copolymer or an additionally nucleated impact-resistant polypropylene copolymer (nICP).

4. Crosslinking agent-free thermoplastic mixture according to any of Claims 1 to 3, **characterized in that** the weight ratio of impact-resistant polypropylene copolymer to ethylene-1-octene copolymer is in the range from 40/60 to 60/40.

5. Crosslinking agent-free thermoplastic mixture according to any of Claims 1 to 4, **characterized in that** the 1-octene content in the ethylene-1-octene copolymer is in the range from 7 to 18 mol%.

6. Crosslinking agent-free thermoplastic mixture according to any of Claims 1 to 5, **characterized in that** the total weight of impact-resistant polypropylene copolymer and ethylene-1-octene copolymer in the thermoplastic mixture accounts for at least 50% by weight.

7. Crosslinking agent-free thermoplastic mixture according to any of Claims 1 to 6, **characterized in that** the mixture comprises one or more additives selected from fillers, UV and heat stabilizers, plasticizers, lubricants, biocides, flame retardants and antioxidants.

8. Crosslinking agent-free thermoplastic mixture according to any of Claims 1 to 7, **characterized in that** the mixture is in the form of a roofing membrane or sealing membrane or, in the case of multilayered membranes, in the form of at least one layer of a roofing membrane or sealing membrane.

9. Use of a crosslinking agent-free thermoplastic mixture according to any of Claims 1 to 8 for roofing membranes or sealing membranes.

**Revendications**

1. Mélange thermoplastique sans agent de réticulation, comprenant au moins un copolymère de polypropylène résistant aux impacts (ICP) et au moins un copolymère d'éthylène-1-octène, le rapport en poids entre le copolymère de polypropylène résistant aux impacts (ICP) et le copolymère d'éthylène-1-octène se situant dans la plage allant de 35/65 à 65/35, le copolymère de polypropylène résistant aux impacts étant un copolymère séquencé de propylène et d'une oléfine.

2. Mélange thermoplastique sans agent de réticulation selon la revendication 1, **caractérisé en ce que** la teneur en 1-octène dans le copolymère d'éthylène-1-octène, déterminée par le procédé décrit aux pages 8 et 9, se situe dans la plage allant de 2 à 20 % en moles.

3. Mélange thermoplastique sans agent de réticulation selon la revendication 1 ou la revendication 2, **caractérisé en ce que** le copolymère de polypropylène résistant aux impacts (ICP) est un copolymère de polypropylène résistant aux impacts non nucléé de manière supplémentaire ou un copolymère de polypropylène résistant aux impacts nucléé de manière supplémentaire (nICP).

4. Mélange thermoplastique sans agent de réticulation selon l'une quelconque des revendications 1 à 3, **caractérisé en ce que** le rapport en poids entre le copolymère de polypropylène résistant aux impacts et le copolymère d'éthylène-1-octène se situe dans la plage allant de 40/60 à 60/40.

5. Mélange thermoplastique sans agent de réticulation selon l'une quelconque des revendications 1 à 4, **caractérisé en ce que** la teneur en 1-octène dans le copolymère d'éthylène-1-octène se situe dans la plage allant de 7 à 18 % en moles.

6. Mélange thermoplastique sans agent de réticulation selon l'une quelconque des revendications 1 à 5, **caractérisé en ce que** le poids commun du copolymère de polypropylène résistant aux impacts et du copolymère d'éthylène-1-octène dans le mélange thermoplastique est d'au moins 50 % en poids.

7. Mélange thermoplastique sans agent de réticulation selon l'une quelconque des revendications 1 à 6, **caractérisé en ce que** le mélange comprend un ou plusieurs additifs choisis parmi les charges, les stabilisateurs UV et thermiques, les plastifiants, les lubrifiants, les biocides, les agents ignifuges et les antioxydants.

**8.** Mélange thermoplastique sans agent de réticulation selon l'une quelconque des revendications 1 à 7, **caractérisé en ce que** le mélange se présente sous la forme d'une bande de toiture ou d'une bande d'étanchéité ou, dans le cas de bandes multicouches, sous la forme d'au moins une couche d'une bande de toiture ou d'une bande d'étanchéité.

**9.** Utilisation d'un mélange thermoplastique sans agent de réticulation selon l'une quelconque des revendications 1 à 8 pour des bandes de toiture ou des bandes d'étanchéité.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6803415 B1
- EP 0605180 A1
- US 2008150261 A1
- US 2002086947 A1

**In der Beschreibung aufgeführte Nicht-Patentliteratur**

- **NITTA et al.** *Polymer,* 1998, vol. 39, 53-58
- **YAMAGUSHI et al.** *J. Polym. Sci.,* 1997, vol. 35, 953-961
- **YAMAGUSHI et al.** *J. Appl. Polym. Sci.,* 1996, vol. 62, 87-97
- **WEAVER, L.B. et al.** A New Class of Higher Melting Polyolefin Elastomers for Automotive Applications. *Proceedings of the SPE Automotive TPO Global Conference,* 2006